# EUROPÄISCHE PATENTSCHRIFT

(11) **EP 4 171 972 B1**
(45) Veröffentlichungstag und Bekanntmachung des Hinweises auf die Patenterteilung: **08.05.2024**
(21) Anmeldenummer: 20821172.2
(22) Anmeldetag: 08.12.2020
(51) Int. Cl.: B60C 11/12

(54) **FAHRZEUGLUFTREIFEN**
PNEUMATIC VEHICLE TIRE
BANDAGE PNEUMATIQUE DE VÉHICULE

(30) Priorität: 30.06.2020 DE 102020208125
(43) Veröffentlichungstag der Anmeldung: 03.05.2023
(73) Patentinhaber: Continental Reifen Deutschland GmbH, 30175 Hannover (DE)
(72) Erfinder: SENG, Matthias, 30165 Hannover (DE); HEINHAUPT, Torsten, 30165 Hannover (DE); BROCKMANN, Jürgen, 30165 Hannover (DE)
(74) Vertreter: Continental Corporation
(86) Internationale Anmeldenummer: PCT/EP2020/084990
(87) Internationale Veröffentlichungsnummer: WO 2022/002425

(56) Entgegenhaltungen:
- EP-A1- 1 623 818
- JP-A- 2007 045 316

## Beschreibung

Die Erfindung betrifft einen Fahrzeugluftreifen mit einem Laufstreifen mit Profilpositiven mit in Draufsicht parallel zueinander und zur axialen Richtung unter einem Winkel von 0° bis 50° verlaufenden, eine Breite von 0,4 mm bis 1,2 mm und eine maximale Tiefe von 70% bis 100% der Profiltiefe aufweisenden Einschnitten, welche jeweils einen mittleren, in Draufsicht wellenförmig verlaufenden Einschnittabschnitt mit einer Amplitude und einer Wellenlänge sowie zumindest einer von der Laufstreifenperipherie ins Innere des Einschnittes hineinragenden gewellten Einschnittzone aufweisen, wobei die gewellte Einschnittzone an drei in Draufsicht aufeinanderfolgende, jeweils über eine halbe Wellenlänge reichende Wellenabschnitte des mittleren Einschnittabschnittes anschließt und, betrachtet in Sicht auf eine der Einschnittwände, aus einem U-förmigen äußeren Zonenbereich, welcher zwischen den beiden äußeren Wellenabschnitten verläuft, und einem von diesem umlaufenen, an den mittleren Wellenabschnitt anschließenden, entgegengesetzt zum äußeren Zonenbereich gekrümmten inneren Zonenbereich gebildet ist, wobei die Amplitude des wellenförmig verlaufenden Einschnittabschnittes im inneren Zonenbereich ausgehend von der Laufstreifenperipherie in radialer Richtung abnimmt.

Ein derartiger Fahrzeugluftreifen ist beispielsweise aus der JP 2007 045 316 A bekannt. Der offenbarte Fahrzeugluftreifen weist einen Laufstreifen mit Profilpositiven mit Einschnitten auf, welche, in Draufsicht betrachtet, wellenförmig verlaufen und einen in Draufsicht wellenförmig verlaufenden Einschnittabschnitt aufweisen, von welchem ins Innere des Einschnitts hineinragende gewellte Einschnittzonen ausgehen, die jeweils an drei in Draufsicht aufeinanderfolgende, jeweils über eine halbe Wellenlänge reichende Wellenabschnitte anschließen. Jede gewellte Einschnittzone ist aus einem U-förmigen äußeren Zonenbereich und einem von diesem umlaufenen an den mittleren der drei Wellenabschnitte anschließenden, gekrümmten inneren Zonenbereich gebildet, wobei die Amplitude im inneren Zonenbereich ausgehend von der Laufstreifenperipherie in radialer Richtung abnimmt. Die Einschnitte sollen unter Aufrechterhaltung einer guten Profilsteifigkeit und einer guter Abriebbeständigkeit für die Bremseigenschaften günstig sein.

Die EP 1 623 818 A1 offenbart eine an einer Vulkanisationsform montierbare Lamelle zum Ausformen eines Einschnitts im Laufstreifen eines Fahrzeugluftreifens. Ein mit dieser Lamelle ausgeformter Einschnitt weist in Draufsicht wellenförmig verlaufende Einschnittabschnitte mit jeweils einer ins Innere des Einschnittes hineinragenden gewellten Einschnittzone auf. Jede gewellte Einschnittzone schließt an drei in Draufsicht aufeinanderfolgende, jeweils über eine halbe Wellenlänge reichende Wellenabschnitte an und ist aus einem V-artigen äußeren Zonenbereich und einem von diesem umlaufenen inneren Zonenbereich gebildet.

Ferner ist aus der WO 2013/064300 A1 ein Fahrzeugluftreifen mit einem Laufstreifen mit Profilpositiven mit Einschnitten bekannt, wobei sich die Einschnitte jeweils aus einem in Draufsicht in Form einer harmonischen Welle verlaufenden, mittleren Einschnittabschnitt und zwei randseitigen, gerade und miteinander fluchtend verlaufenden Einschnittabschnitten zusammensetzen. Der mittlere Einschnittabschnitt weist eine ins Innere des Einschnittes hineinragende gewellte Einschnittzone auf, in welcher sich die Wellenlänge ausgehend von der Laufstreifenperiphere radial nach innen vergrößert oder verringert. Die Amplitude bleibt über den Tiefenverlauf des Einschnittes konstant. Derart ausgeführte Einschnitte beeinflussen die Steifigkeit der Profilpositive, wodurch sich die Fahreigenschaften auf trockner Fahrbahn verbessern lassen. Außerdem wird bei an- bzw. abgefahrenen Reifen dem Nachlassen in der Seitenführung auf winterlicheren Fahrbahnen entgegengewirkt.

Ferner ist aus der US 4 598 747 A ein Fahrzeugluftreifen mit einem Laufstreifen mit Profilblöcken bekannt, in welchen parallel zueinander und in Draufsicht harmonisch wellenförmig verlaufende Einschnitte mit ins Innere des Einschnittes hineinragenden gewellten Einschnittzonen ausgebildet sind. Gemäß einer Variante nimmt die Amplitude des wellenförmig verlaufenden Einschnittes in der gewellten Einschnittzone von der Außenfläche des jeweiligen Profilblockes radial nach innen auf lineare, also gleichmäßige, Weise ab. Bevorzugter Weise ist die Amplitude des wellenförmig verlaufenden Einschnittabschnittes in der gewellten Einschnittzone in einem radial äußeren Zonenbereich konstant und nimmt nur in einem radial inneren Zonenbereich ab.

In Draufsicht zumindest abschnittsweise wellen- oder zick-zack-förmig verlaufende Einschnitte sind im Hinblick auf die Quersteifigkeit der Profilpositive günstig, da sich die durch solche Einschnitte gebildeten Profilpositivsegmente vor allem unter Belastungen in axialer Richtung aneinander abstützen können. Die bisher bekannten Einschnitte sind im Hinblick auf die über den Laufstreifenabrieb sich ändernde Steifigkeit der Profilpositive und dem damit verbundenen Biegeverhalten der Profilpositivsegmente insofern nicht optimal, da sie einen ungleichmäßigen Abrieb verursachen können.

Der Erfindung liegt daher die Aufgabe zugrunde, bei einem Fahrzeugluftreifen der eingangs genannter Art das Auftreten eines ungleichmäßigen Abriebes zu vermeiden.

Gelöst wird die gestellte Aufgabe erfindungsgemäß dadurch, dass der äußere Zonenbereich über seine gesamte Erstreckung unter Beibehaltung der halben Wellenlänge entgegengesetzt zum inneren Zonenbereich gekrümmt verläuft.

Durch die speziell gewellte Einschnittzone weist der Einschnitt bei neuem bzw. wenig abgeriebenen Laufstreifen eine ausgeprägte "Wellenform" auf, wodurch sich die Einschnittwände bei Belastung in Querrichtung sehr gut aneinander abstützen können. Durch die in Richtung zum Einschnittgrund abnehmende Amplitude im inneren Zonenbereich verringern sich diese Abstützungseffekte mit fortschreitendem Laufstreifenabrieb in und es können vermehrt in Umfangsrichtung wirkende Abstützungseffekte auftreten. Durch diese Maßnahmen wird die Steifigkeit und das damit verbundene Biegeverhalten der Profilpositivsegmente derart beeinflusst, dass der Abrieb deutlich vergleichmäßigt ist. Dabei bleibt eine gute Performance des Reifens unter winterlichen Fahrbedingungen, insbesondere auf Eis und Schnee, erhalten.

Gemäß einer bevorzugten Ausführung nimmt die Amplitude des wellenförmig verlaufenden Einschnittabschnittes im inneren Zonenbereich ausgehend von der Laufstreifenperipherie in radialer Richtung auf progressive Weise ab. Dies ist im Hinblick auf das Biege- und das Abriebverhalten der Profilpositivsegmente äußerst vorteilhaft, weil die Steifigkeit der Profilpositivsegmente mit fortschreitendem Abrieb überproportional zunimmt.

Die Einschnitte lassen sich bei der Vulkanisation des Reifens besonders zuverlässig in hoher Qualität in den Profilpositiven des Laufstreifen ausformen, wenn die gewellte Einschnittzone in einem in radialer Richtung ermittelten Abstand von bis zu 1,5 mm vor dem Einschnittgrund endet. Diese Ausführung begünstigt zudem die beschriebene vorteilhafte Wirkung der Einschnitte.

Eine weitere bevorzugte Ausführung ist dadurch gekennzeichnet, dass eine mittig durch die gewellte Einschnittzone verlaufende Bezugsfläche die in Ausbreitungsrichtung des wellenförmig verlaufenden Einschnittabschnittes ausgerichtete Einschnittmittelebene im inneren Zonenbereich, betrachtet im senkrecht zur Einschnittmittelebene ausgerichteten und durch die Stelle der maximalen Auslenkung des inneren Zonenbereiches verlaufenden Querschnitt, in einer Tiefe von 45% bis 70%, insbesondere von bis zu 60%, der maximalen Tiefe des Einschnittes schneidet. Durch diese Ausgestaltung ist die Tiefe, in welcher der innere Zonenbereich endet, entsprechend definiert. Beim mit diesem Tiefenbereich korrelierendem Abriebzustand des Laufstreifens treten vermehrt die bereits erwähnten, in Umfangsrichtung wirkenden Abstützungseffekte auf, für welche die nun kaum mehr ausgeprägte Wellenform des Einschnittes günstig ist.

Bei einer weiteren bevorzugten Ausführung weisen die Einschnitte jeweils eine einzige gewellte Einschnittzone auf. Bei dieser Ausführung ist es für die beschriebenen Abstützungseffekte von Vorteil, wenn der mittlere Einschnittabschnitt eine an der Laufstreifenperipherie entlang der Einschnittmittelebene ermittelte Länge von 45% bis 65%, insbesondere von 50% bis 55%, der auf übereinstimmende Weise ermittelten Erstreckungslänge des Einschnittes aufweist.

Ferner ist es für die Abstützungseffekte von Vorteil, wenn die Amplitude des mittleren Einschnittabschnittes an der Laufstreifenperipherie 100% bis 200%, insbesondere 130% bis 160%, der Breite des Einschnittes beträgt.

Darüber hinaus ist es in diesem Zusammenhang von Vorteil, wenn die Amplitude des mittleren Einschnittabschnittes an der Laufstreifenperipherie 10% bis 25%, insbesondere 15% bis 20%, der Wellenlänge des mittleren Einschnittabschnittes an der Laufstreifenperipherie beträgt.

Insbesondere weisen die Einschnitte Einschnittwände auf, welche außerhalb der gewellten Einschnittzone(n) von ebenen Flächen gebildet sind.

Gemäß einer weiteren bevorzugten Ausführung wiesen die Einschnitte zwei an den mittleren Einschnittabschnitt anschließende, in Draufsicht gerade und miteinander fluchtend verlaufende, randseitige Einschnittabschnitte auf, welche insbesondere eine Tiefe von 20% bis 70% der maximalen Tiefe aufweisen. Die randseitigen Einschnittabschnitte tragen zu einer Vergleichmäßigung des Laufstreifenabriebes bei.

In diesem Zusammenhang ist es ferner von Vorteil, wenn die Einschnitte die Profilpositive durchqueren.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Ansicht einiger Profilblöcke eines Laufstreifens eines Fahrzeugluftreifens,
Fig. 2 eine vergrößerte Visualisierung eines Einschnittes gemäß einer Ausführungsvariante der Erfindung,
Fig. 3 eine Draufsicht auf den Einschnitt aus Fig. 2 mit umgebenem Gummimaterial,
Fig. 4 eine analoge Draufsicht zu Fig. 3, wobei der Profilblock bis auf das Niveau der Linie IV-IV der Fig. 2 abgerieben ist,
Fig. 5 eine weitere analoge Draufsicht zu Fig. 3, wobei der Profilblock bis auf das Niveau der Linie V-V der Fig. 2 abgerieben ist,
Fig. 6 einen Querschnitt durch den Einschnitt gemäß der Linie VI-VI der Fig. 3 und
Fig. 7 einen Querschnitt durch den Einschnitt gemäß der Linie VII-VII der Fig. 3.

Gemäß der Erfindung ausgeführte Fahrzeugluftreifen sind insbesondere Reifen in Radialbauart für Personenkraftwagen, Vans oder Light-Trucks, wobei die Fahrzeugluftreifen zum Fahren unter winterlichen Fahrbedingungen besonders gut geeignet sind.

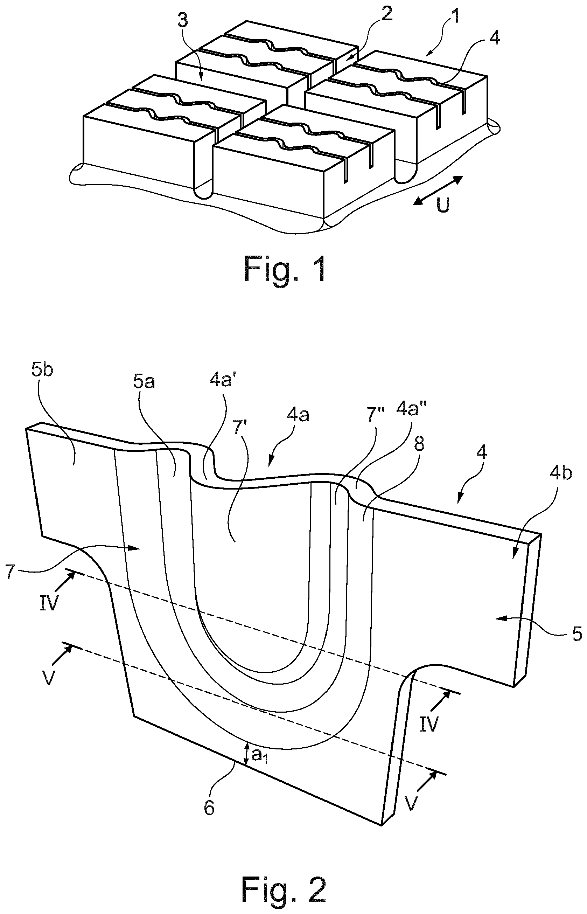

Fig. 1 zeigt vier Profilblöcke 1, welche zu zwei im mittleren Laufstreifenbereich nebeneinander verlaufenden Profilblockreihen gehören, die durch eine beim gezeigten Ausführungsbeispiel gerade verlaufende Umfangsrille 2 voneinander getrennt sind, wobei weitere nicht bezeichnete Umfangsrillen die Profilblockreihen außen begrenzen. Der Doppelpfeil U kennzeichnet die Umfangsrichtung des Reifens.

Die Umfangsrille 2 weist die für den jeweiligen Fahrzeugluftreifen vorgesehene Profiltiefe auf, welche insbesondere 6,5 mm bis 10,0 mm beträgt. Innerhalb der Profilblockreihen sind in Umfangsrichtung benachbarte Profilblöcke 1 jeweils durch eine Querrille 3 voneinander getrennt, welche beim gezeigten Ausführungsbeispiel eine mit der Umfangsrille 2 übereinstimmende Tiefe aufweist.

Jeder Profilblock 1 ist beim gezeigten Ausführungsbeispiel mit zwei übereinstimmend ausgeführten Einschnitten 4 versehen, welche innerhalb jedes Profilblockes 1 gleichmäßig verteilt angeordnet sind, sich parallel zueinander und in Querrichtung erstrecken und den jeweiligen Profilblock 1 durchqueren. Die weitere Ausgestaltung der Einschnitte 4 wird nachfolgend anhand eines einzelnen Einschnittes 4 erläutert.

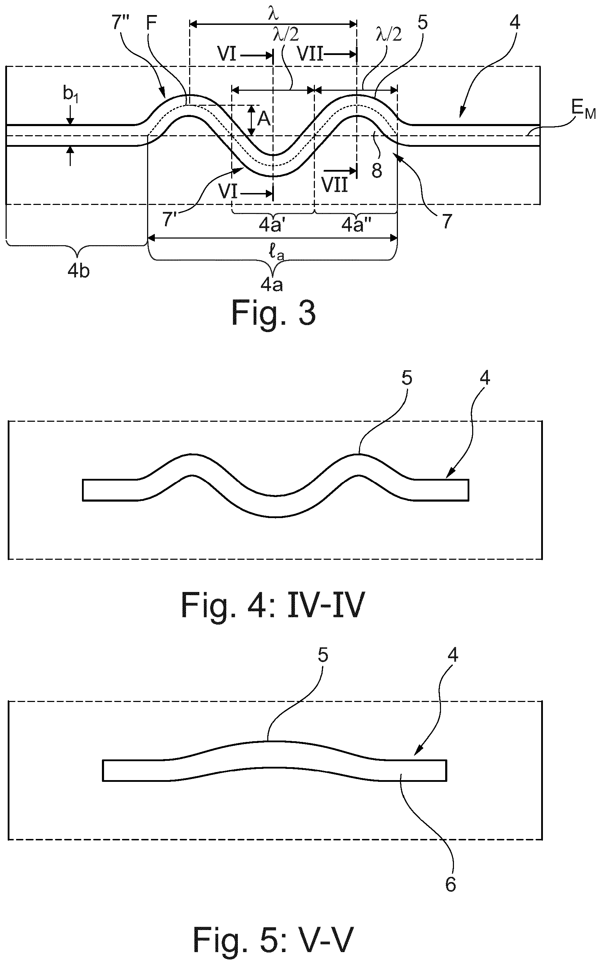

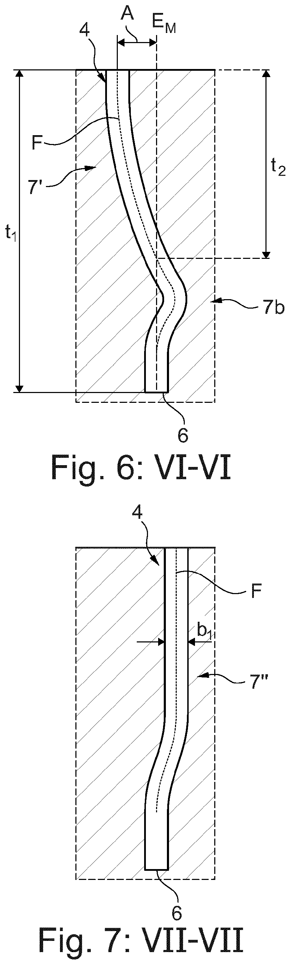

Wie Fig. 2 bis Fig. 7 zeigen, ist der Einschnitt 4 durch zwei korrespondierende Einschnittwände 5 und einen Einschnittgrund 6 (siehe insbesondere Fig. 2) begrenzt, weist eine konstante Breite b₁ (Fig. 3, Fig. 7) von 0,4 mm bis 1,2 mm, insbesondere von bis zu 0,8 mm, sowie in radialer Richtung eine maximale Tiefe ti (Fig. 6) von 70% bis 100%, insbesondere von höchstens 95%, der Profiltiefe auf.

Wie Fig. 3 zeigt, setzt sich der Einschnitt 4, in Draufsicht und im Neuzustand des Reifens betrachtet, aus einem in Form einer harmonischen Welle verlaufenden mittleren Einschnittabschnitt 4a und zwei in Draufsicht gerade sowie miteinander fluchtend verlaufenden randseitigen Einschnittabschnitten 4b zusammen, wobei der Einschnitt 4 eine in Draufsicht in Ausbreitungsrichtung der harmonischen Welle des mittleren Einschnittabschnittes 4a ausgerichtete sowie durch die Mitte der randseitigen Einschnittabschnitte 4b verlaufende Einschnittmittelebene Ein aufweist. Die randseitigen Einschnittabschnitte 4b reichen vorzugsweise bis eine Tiefe von 20% bis 70% der erwähnten maximalen Tiefe ti des Einschnittes 4 (Fig. 2, Fig. 6). Der mittlere Einschnittabschnitt 4a weist über seine gesamte Erstreckung die erwähnte maximale Tiefe ti (Fig. 2) sowie eine an der Laufstreifenperipherie entlang der Einschnittmittelebene Ein ermittelte Länge lₐ von 45% bis 65%, insbesondere von 50% bis 55%, der auf analoge Weise ermittelten Erstreckungslänge des Einschnittes 4 auf. Bevorzugter Weise ist die Länge lₐ des mittleren Einschnittabschnittes 4a derart gewählt, dass die randseitigen Einschnittabschnitte 4b jeweils eine analog zur Länge lₐ ermittelte Länge von zumindest 3,0 mm aufweisen.

Gemäß Fig. 2 weist der mittlere Einschnittabschnitt 4a eine von der Laufstreifenperipherie ausgehende, sich radial nach innen erstreckende, gewellte Einschnittzone 7 auf, welche in einem in radialer Richtung ermittelten Abstand a₁ von bis zu 1,5 mm vor dem Einschnittgrund 6 endet. Die Einschnittzone 7 ist von zwei einander gegenüberliegenden, korrespondierend ausgebildeten, speziell gekrümmten Wandabschnitten 5a der Einschnittwände 5 gebildet bzw. begrenzt. Im Bereich außerhalb der gekrümmten Wandabschnitte 5a sind die Einschnittwände 5 ebene Flächen 5b. Die gekrümmten Wandabschnitte 5a begrenzen an jeder Einschnittwand 5 einen gegenüber den ebenen Flächen 5b ausgebildeten Vorsprung und eine diesem gegenüberliegend ausgebildete Vertiefung, wobei der Vorsprung und die Vertiefung in Fig. 2 nicht beziffert sind. Beim gezeigten Ausführungsbeispiel sind die gekrümmten Wandabschnitte 5a derart gestaltet, dass diese frei von Knickstellen sind und zu den ebenen Flächen 5b entsprechende Übergangsrundungen aufweisen.

Wie Fig. 3 zeigt, weist die dem mittleren Einschnittabschnitt 4a in Draufsicht zugrundeliegende Welle eine Amplitude A und einer Wellenlänge λ auf, wobei die Wellenlänge λ und die Amplitude A relativ zu einer mittig durch die gewellte Einschnittzone 7 verlaufende, in Fig. 3 punktiert angedeuteten Bezugsfläche F ermittelt sind. Die beim Ausführungsbeispiel vorgesehenen Rundungen an den Übergangen des mittleren Einschnittabschnittes 4a zu den randseitigen Einschnittabschnitten 4b bleiben bei der Bezugsfläche F unberücksichtigt. Die nachfolgenden Bezugnahmen auf die Amplitude A und Wellenlänge λ des mittleren Einschnittabschnittes 4a beziehen sich jeweils auf die ihm zugrundeliegende Welle.

Da der mittlere Einschnittabschnitt 4a, wie bereits erwähnt, an der Laufstreifenperipherie in Form einer harmonischen Welle verläuft, sind die Wellenlänge λ und die Amplitude A an der Laufstreifenperipherie konstant, wobei die Amplitude A an der Laufstreifenperipherie 100% bis 200%, insbesondere 130% bis 160%, der Breite b₁ des Einschnittes 4 und/oder 10% bis 25%, insbesondere 15% bis 20%, der an der Laufstreifenperipherie gemessenen Wellenlänge λ beträgt. Der mittlere Einschnittabschnitt 4a verläuft an der Laufstreifenperipherie über 1,5 Wellenlängen X und setzt sich in Draufsicht aus einem über eine halbe Wellenlänge λ/2 verlaufenden mittleren Wellenabschnitt 4a' und zwei jeweils über eine halbe Wellenlänge λ/2 verlaufenden äußeren Wellenabschnitten 4a" zusammen.

Wie Fig. 2 zeigt, setzt sich die gewellte Einschnittzone 7, betrachtet in Sicht auf eine der Einschnittwände 5, aus einem U-förmigen äußeren Zonenbereich 7" und einem von diesem umlaufenen inneren Zonenbereich 7` zusammen. Der äußere Zonenbereich 7" verläuft unter Beibehaltung der halben Wellenlänge λ/2 zwischen den beiden äußeren Wellenabschnitten 4a" und umläuft den inneren Zonenbereich 7`, welcher zum äußere Zonenbereich 7" entgegensetzt gekrümmt ist und an den mittleren Wellenabschnitt 4a' anschließt (siehe auch Fig. 3). Entsprechend der beschriebenen Ausgestaltung befindet sich der innere Zonenbereich 7` an der einen Seite der Einschnittmittelebene Ein und der äußere Zonenbereich 7" an der anderen Seite der Einschnittmittelebene Ein (Fig. 3).

Wie Fig. 3 in Kombination mit Fig. 6 zeigt, nimmt im inneren Zonenbereich 7` die Amplitude A des mittleren Einschnittabschnittes 4a, im Querschnitt senkrecht zur Einschnittmittelebene Ein betrachtet, in radialer Richtung von der Laufstreifenperipherie in Richtung zum Einschnittgrund 6 auf progressive (beschleunigte) Weise bis zur Einschnittmittelebene E_{M} ab (Fig. 6). Dementsprechend nimmt die Amplitude im inneren Zonenbereich 7` ausgehend von der Laufstreifenperipherie zunächst nur geringfügig und mit zunehmender Tiefe auf eine beschleunigte, also verstärkte Weise ab, sodass der innere Zonenbereich 7`, im Querschnitt senkrecht zur Einschnittmittelebene E_{M} betrachtet, durchgehend gekrümmt ist (Fig. 6). Im inneren Zonenbereich 7` schneidet die Bezugsfläche F die Einschnittmittelebene E_{M}, im senkrecht zur Einschnittmittelebene Ein ausgerichteten und durch die Stelle der maximalen Auslenkung (Amplitude) verlaufenden Querschnitt betrachtet, in einer Tiefe t₂ von 45% bis 70%, insbesondere von bis zu 60%, der maximalen Tiefe ti des Einschnittes 4 (Fig. 6). Beim gezeigten Ausführungsbeispiel ist die Amplitude A des mittleren Einschnittabschnittes 4a im äußeren Zonenbereich 7" konstant (Fig. 7), alternativ kann die Amplitude A im äußeren Zonenbereich 7" in radialer Richtung abnehmen.

Die Erfindung ist auf das beschriebene Ausführungsbeispiel nicht beschränkt.

Der mittlere Einschnittabschnitt kann über mehr als 1,5 Wellenlängen λ verlaufen, d.h. mehr als drei, insbesondere bis zu sieben, jeweils über eine halbe Wellenlänge λ/2 verlaufende mittlere Wellenabschnitte aufweisen. Die gewellte Einschnittzone schließt, wie im Zusammenhang mit dem Ausführungsbeispiel beschrieben, an drei in Draufsicht aufeinanderfolgende, jeweils über eine halbe Wellenlänge λ/2 verlaufende Wellenabschnitte des mittlere Einschnittabschnittes an. Bei entsprechend lang ausgeführtem, mittleren Einschnittabschnitt können die Einschnitte jeweils mehrere, insbesondere zwei, nebeneinander ausgebildete gewellte Einschnittzonen aufweisen. Jene Wellenabschnitte eines mittleren Einschnittabschnittes, an welche keine gewellte Einschnittzone anschließt, können in bekannter Weise ausgeführt sein.

Die Einschnitte können in beliebigen Profilpositiven, daher beispielsweise auch in in Umfangsrichtung umlaufenden Profilrippen, ausgebildet sein. Darüber hinaus können die Einschnitte ein- oder beidseitig innerhalb der Profilpositiven enden, sodass diese die Profilpositive nicht durchqueren. Die Einschnitte verlaufen zumindest in Gruppen und insbesondere zumindest innerhalb des jeweiligen Profilpositivs parallel zueinander sowie unter einem Winkel von 0° bis 50° zur axialen Richtung, wobei sich der Winkel jeweils auf die Einschnittmittelebene Ein bezieht. Die randseitigen Einschnittabschnitte können eine mit dem mittleren Einschnittabschnitt übereinstimmende Tiefe aufweisen.

### Bezugsziffernliste

- 1: Profilblock
- 2: Umfangsrille
- 3: Querrille
- 4: Einschnitt
- 4a: mittlerer Einschnittabschnitt
- 4a': mittlerer Wellenabschnitt
- 4a": äußerer Wellenabschnitt
- 4b: randseitiger Einschnittabschnitt
- 5: Einschnittwand
- 5a: gekrümmter Wandabschnitt
- 5b: ebene Fläche
- 6: Einschnittgrund
- 7: gewellte Einschnittzone
- 7': innerer Zonenbereich
- 7": äußerer Zonenbereich
- a₁: Abstand
- A: Amplitude
- b₁: Breite
- E_{M}: Einschnittmittelebene
- F: Bezugsfläche
- lₐ: Länge
- t₁: maximale Tiefe
- t₂: Tiefe
- U: Doppelpfeil (Umfangsrichtung)
- λ: Wellenlänge

## Patentansprüche

1. Fahrzeugluftreifen mit einem Laufstreifen mit Profilpositiven (1) mit in Draufsicht parallel zueinander und zur axialen Richtung unter einem Winkel von 0° bis 50° verlaufenden, eine Breite (b₁) von 0,4 mm bis 1,2 mm und eine maximale Tiefe (t₁) von 70% bis 100% der Profiltiefe aufweisenden Einschnitten (4), welche jeweils einen mittleren, in Draufsicht wellenförmig verlaufenden Einschnittabschnitt (4a) mit einer Amplitude (A) und einer Wellenlänge (λ) sowie zumindest einer von der Laufstreifenperipherie ins Innere des Einschnittes (4) hineinragenden gewellten Einschnittzone (7) aufweisen, wobei die gewellte Einschnittzone (7) an drei in Draufsicht aufeinanderfolgende, jeweils über eine halbe Wellenlänge (λ/2) reichende Wellenabschnitte (4a', 4a") des mittleren Einschnittabschnittes (4a) anschließt und, betrachtet in Sicht auf eine der Einschnittwände (5), aus einem U-förmigen äußeren Zonenbereich (7"), welcher zwischen den beiden äußeren Wellenabschnitten (4a") verläuft, und einem von diesem umlaufenen, an den mittleren Wellenabschnitt (4a') anschließenden, entgegengesetzt zum äußeren Zonenbereich (7") gekrümmten inneren Zonenbereich (7') gebildet ist, wobei die Amplitude des wellenförmig verlaufenden Einschnittabschnittes (4a) im inneren Zonenbereich (7') ausgehend von der Laufstreifenperipherie in radialer Richtung abnimmt,
**dadurch gekennzeichnet,**
**dass** der äußere Zonenbereich (7") über seine gesamte Erstreckung unter Beibehaltung der halben Wellenlänge (λ/2) entgegengesetzt zum inneren Zonenbereich (7') gekrümmt verläuft.

2. Fahrzeugluftreifen nach Anspruch 1, **dadurch gekennzeichnet, dass** die Amplitude des wellenförmig verlaufenden Einschnittabschnittes (4a) im inneren Zonenbereich (7') ausgehend von der Laufstreifenperipherie in radialer auf progressive Weise abnimmt.

3. Fahrzeugluftreifen nach Anspruch 1 oder 2, **dadurch gekennzeichnet, dass** die gewellte Einschnittzone (7) in einem in radialer Richtung ermittelten Abstand (a₁) von bis zu 1,5 mm vor dem Einschnittgrund (6) endet.

4. Fahrzeugluftreifen nach einem der Ansprüche 1 bis 3, **dadurch gekennzeichnet, dass** eine mittig durch die gewellte Einschnittzone (7) verlaufende Bezugsfläche (F) die in Ausbreitungsrichtung des wellenförmig verlaufenden Einschnittabschnittes (4a) ausgerichtete Einschnittmittelebene (E_{M}) im inneren Zonenbereich (7'), betrachtet im senkrecht zur Einschnittmittelebene (E_{M}) ausgerichteten und durch die Stelle der maximalen Auslenkung des inneren Zonenbereiches (7') verlaufenden Querschnitt betrachtet, in einer Tiefe (t₂) von 45% bis 70%, insbesondere von bis zu 60%, der maximalen Tiefe (t₁) des Einschnittes (4) schneidet.

5. Fahrzeugluftreifen nach einem der Ansprüche 1 bis 4, **dadurch gekennzeichnet, dass** die Einschnitte (4) jeweils eine einzige gewellte Einschnittzone (7) aufweisen.

6. Fahrzeugluftreifen nach Anspruch 5, **dadurch gekennzeichnet, dass** die Wellenabschnitte (4a', 4a") des mittleren Einschnittabschnittes (4a), an welche die gewellte Einschnittzone (7) anschließt, eine an der Laufstreifenperipherie entlang der Einschnittmittelebene (E_{M}) ermittelte Länge (lₐ) von 45% bis 65%, insbesondere von 50% bis 55%, der auf übereinstimmende Weise ermittelten Erstreckungslänge des Einschnittes (4) aufweist.

7. Fahrzeugluftreifen nach einem der Ansprüche 1 bis 6, **dadurch gekennzeichnet, dass** die Amplitude (A) des mittleren Einschnittabschnittes (4a) an der Laufstreifenperipherie 100% bis 200%, insbesondere 130% bis 160%, der Breite (b₁) des Einschnittes (4) beträgt.

8. Fahrzeugluftreifen nach einem der Ansprüche 1 bis 7, **dadurch gekennzeichnet, dass** die Amplitude (A) des mittleren Einschnittabschnittes (4a) an der Laufstreifenperipherie 10% bis 25%, insbesondere 15% bis 20%, der Wellenlänge (λ) des mittleren Einschnittabschnittes (4a) an der Laufstreifenperipherie beträgt.

9. Fahrzeugluftreifen nach einem der Ansprüche 1 bis 8, **dadurch gekennzeichnet, dass** die Einschnitte (4) Einschnittwände (5) aufweisen, welche außerhalb der gewellten Einschnittzone(n) (7) von ebenen Flächen gebildet sind.

10. Fahrzeugluftreifen nach einem der Ansprüche 1 bis 9, **dadurch gekennzeichnet, dass** die Einschnitte (4) zwei an den mittleren Einschnittabschnitt (4a) anschließende, in Draufsicht gerade und miteinander fluchtend verlaufende, randseitige Einschnittabschnitte (4b) aufweisen, welche insbesondere eine Tiefe von 20% bis 70% der maximalen Tiefe (t₁) aufweisen.

11. Fahrzeugluftreifen nach einem der Ansprüche 1 bis 10, **dadurch gekennzeichnet, dass** die Einschnitte (4) die Profilpositive (1) durchqueren.

## Claims

1. Pneumatic vehicle tyre having a tread with profile positives (1) with sipes (4) which, in plan view, extend parallel to one another and at an angle of 0° to 50° to the axial direction and which have a width (b₁) of 0.4 mm to 1.2 mm and a maximum depth (t₁) of 70% to 100% of the profile depth, said sipes each having a central sipe portion (4a) which, in plan view, extends in an undulating manner and has an amplitude (A) and a wavelength (λ) and has at least one undulating sipe zone (7) which projects from the tread periphery into the interior of the sipe (4), wherein the undulating sipe zone (7) adjoins three undulation portions (4a`, 4a"), which in plan view are positioned in succession and each extend over a half wavelength (λ/2), of the central sipe portion (4a) and, in a view directed towards one of the sipe walls (5), is formed from a U-shaped outer zone region (7"), which extends between the two outer undulation portions (4a"), and from an inner zone region (7'), around which said outer zone region runs and which adjoins the central undulation portion (4a`) and is curved oppositely to the outer zone region (7"), wherein the amplitude of the undulating sipe portion (4a) in the inner zone region (7') decreases in a radial direction proceeding from the tread periphery,
**characterized**
**in that**, over its entire extent, the outer zone region (7") extends so as to be curved oppositely to the inner zone region (7') while maintaining the half wavelength (λ/2).

2. Pneumatic vehicle tyre according to Claim 1, **characterized in that**, proceeding from the tread periphery, the amplitude of the undulating sipe portion (4a) in the inner zone region (7') decreases in a radial direction in a progressive manner.

3. Pneumatic vehicle tyre according to Claim 1 or 2, **characterized in that** the undulating sipe zone (7) ends at a distance (a₁), determined in a radial direction, of up to 1.5 mm before the sipe base (6).

4. Pneumatic vehicle tyre according to one of Claims 1 to 3, **characterized in that** a reference surface (F) extending centrally through the undulating sipe zone (7) intersects the sipe central plane (E_{M}), which is oriented in the propagation direction of the undulating sipe portion (4a), in the inner zone region (7') at a depth (t₂) of 45% to 70%, in particular of up to 60%, of the maximum depth (t₁) of the sipe (4), in a view of the cross section oriented perpendicularly to the sipe central plane (E_{M}) that extends through the location of the maximum deflection of the inner zone region (7').

5. Pneumatic vehicle tyre according to one of Claims 1 to 4, **characterized in that** the sipes (4) each have a single undulating sipe zone (7).

6. Pneumatic vehicle tyre according to Claim 5, **characterized in that** the undulation portions (4a`, 4a") of the central sipe portion (4a), which are adjoined by the undulating sipe zone (7), have a length (lₐ), determined at the tread periphery along the sipe central plane (E_{M}), of 45% to 65%, in particular of 50% to 55%, of the extent length, determined in a corresponding manner, of the sipe (4).

7. Pneumatic vehicle tyre according to one of Claims 1 to 6, **characterized in that** the amplitude (A) of the central sipe portion (4a) at the tread periphery is 100% to 200%, in particular 130% to 160%, of the width (b₁) of the sipe (4).

8. Pneumatic vehicle tyre according to one of Claims 1 to 7, **characterized in that** the amplitude (A) of the central sipe portion (4a) at the tread periphery is 10% to 25%, in particular 15% to 20%, of the wavelength (λ) of the central sipe portion (4a) at the tread periphery.

9. Pneumatic vehicle tyre according to one of Claims 1 to 8, **characterized in that** the sipes (4) have sipe walls (5) which are formed by planar surfaces outside the undulating sipe zone(s) (7).

10. Pneumatic vehicle tyre according to one of Claims 1 to 9, **characterized in that** the sipes (4) have two edge-side sipe portions (4b) which adjoin the central sipe portion (4a) and which, in plan view, extend straight and so as be aligned with one another and which have in particular a depth of 20% to 70% of the maximum depth (t₁).

11. Pneumatic vehicle tyre according to one of Claims 1 to 10, **characterized in that** the sipes (4) extend across the profile positives (1).

## Revendications

1. Pneumatique de véhicule avec une bande de roulement avec des éléments positifs de profil (1) avec des entailles (4) s'étendant en vue de dessus parallèlement les unes aux autres et selon un angle par rapport à la direction axiale de 0° à 50°, présentant une largeur (b₁) de 0,4 mm à 1,2 mm et une profondeur maximale (t₁) de 70 % à 100 % de la profondeur de profil, qui présentent chacune une section d'entaille centrale (4a) s'étendant sous forme ondulée en vue de dessus avec une amplitude (A) et une longueur d'onde (λ) ainsi qu'au moins une zone d'entaille ondulée (7) pénétrant à l'intérieur de l'entaille (4) à partir de la périphérie de la bande de roulement, la zone d'entaille ondulée (7) se raccordant à trois sections d'onde (4a', 4a") successives en vue de dessus de la section d'entaille centrale (4a), s'étendant chacune sur une demi-longueur d'onde (λ/2), et étant formée, vue sur l'une des parois d'entaille (5), d'une région de zone extérieure (7") en forme de U, qui s'étend entre les deux sections d'onde extérieures (4a"), et d'une région de zone intérieure contournée par celle-ci, se raccordant à la section d'onde centrale (4a'), courbée à l'opposé de la région de zone extérieure (7"), l'amplitude de la section d'entaille s'étendant sous forme ondulée (4a) diminuant dans la direction radiale dans la région de zone intérieure (7') à partir de la périphérie de la bande de roulement,
**caractérisé en ce que**
la région de zone extérieure (7") s'étend sur toute son étendue en conservant la demi-longueur d'onde (λ/2) sous forme courbée à l'opposé de la région de zone intérieure (7').

2. Pneumatique de véhicule selon la revendication 1, **caractérisé en ce que** l'amplitude de la section d'entaille s'étendant sous forme ondulée (4a) dans la région de zone intérieure (7') diminue de manière radiale et progressive à partir de la périphérie de la bande de roulement.

3. Pneumatique de véhicule selon la revendication 1 ou 2, **caractérisé en ce que** la zone d'entaille ondulée (7) se termine à une distance (a₁), déterminée dans la direction radiale, de jusqu'à 1,5 mm avant le fond d'entaille (6).

4. Pneumatique de véhicule selon l'une quelconque des revendications 1 à 3, **caractérisé en ce qu'**une surface de référence (F) passant au milieu de la zone d'entaille ondulée (7) coupe le plan médian d'entaille (E_{M}) orienté dans la direction de propagation de la section d'entaille (4a) s'étendant sous forme ondulée dans la région de zone intérieure (7'), vue dans la section transversale orientée perpendiculairement au plan médian d'entaille (EM) et passant par l'emplacement de la déviation maximale de la région de zone intérieure (7'), à une profondeur (t₂) de 45 % à 70 %, notamment jusqu'à 60 %, de la profondeur maximale (t₁) de l'entaille (4).

5. Pneumatique de véhicule selon l'une quelconque des revendications 1 à 4, **caractérisé en ce que** les entailles (4) présentent chacune une seule zone d'entaille ondulée (7).

6. Pneumatique de véhicule selon la revendication 5, **caractérisé en ce que** les sections ondulées (4a', 4a") de la section d'entaille centrale (4a), auxquelles se raccorde la zone d'entaille ondulée (7), présentent une longueur (lₐ), déterminée à la périphérie de la bande de roulement le long du plan médian d'entaille (E_{M}), de 45 % à 65 %, notamment de 50 % à 55 %, de la longueur d'étendue de l'entaille (4), déterminée de manière concordante.

7. Pneumatique de véhicule selon l'une quelconque des revendications 1 à 6, **caractérisé en ce que** l'amplitude (A) de la section d'entaille centrale (4a) à la périphérie de la bande de roulement est de 100 % à 200 %, notamment de 130 % à 160 %, de la largeur (b₁) de l'entaille (4).

8. Pneumatique de véhicule selon l'une quelconque des revendications 1 à 7, **caractérisé en ce que** l'amplitude (A) de la section d'entaille centrale (4a) à la périphérie de la bande de roulement est de 10 % à 25 %, notamment de 15 % à 20 %, de la longueur d'onde (λ) de la section d'entaille centrale (4a) à la périphérie de la bande de roulement.

9. Pneumatique de véhicule selon l'une quelconque des revendications 1 à 8, **caractérisé en ce que** les entailles (4) présentent des parois d'entaille (5) qui sont formées par des surfaces planes en dehors de la ou des zones d'entaille ondulées (7).

10. Pneumatique de véhicule selon l'une quelconque des revendications 1 à 9, **caractérisé en ce que** les entailles (4) présentent deux sections d'entaille (4b) côté bord, qui se raccordent à la section d'entaille centrale (4a), s'étendent en ligne droite en vue de dessus et sont alignées l'une avec l'autre, et qui présentent notamment une profondeur de 20 % à 70 % de la profondeur maximale (t₁).

11. Pneumatique de véhicule selon l'une quelconque des revendications 1 à 10, **caractérisé en ce que** les entailles (4) traversent les éléments positifs de profil (1).
